# EUROPEAN PATENT SPECIFICATION

(11) **EP 1 837 782 B1**
(45) Date of publication and mention of the grant of the patent: **17.05.2017**
(21) Application number: 07104135.4
(22) Date of filing: 14.03.2007
(51) Int. Cl.: G06F 17/30

(54) **Document search apparatus, document management system, document search system and document search method**
Vorrichtung zum Suchen von Dokumenten, Dokumentverwaltungssystem und System und Verfahren zum Suchen von Dokumenten
Appareil de recherche de documents, système de gestion de documents et système de recherche de documents et procédé de recherche de documents

(30) Priority: 24.03.2006 JP 2006083869
(43) Date of publication of application: 26.09.2007
(73) Proprietor: CANON KABUSHIKI KAISHA, Ohta-ku Tokyo 146-8501 (JP)
(72) Inventor: Todaka, Shinji, Tokyo Tokyo 146-8501 (JP)
(74) Representative: TBK

(56) References cited:
- EP-A- 1 014 282
- WO-A-2005/038611
- DE-A1- 19 651 788
- US-A1- 2004 068 486
- VELEZ B ET AL ASSOCIATION FOR COMPUTING MACHINERY: "FAST AND EFFECTIVE QUERY REFINEMENT" PROCEEDINGS OF THE 20TH ANNUAL INTERNATIONAL ACM-SIGIR CONFERENCE ON RESEARCH AND DEVELOPMENT IN INFORMATION RETRIEVAL. PHILADELPHIA, PA, JULY 27 - 31, 1997, ANNUAL INTERNATIONAL ACM-SIGIR CONFERENCE ON RESEARCH AND DEVELOPMENT IN INFORMATION RETRIEV, 27 July 1997 (1997-07-27), pages 6-15, XP000782003 ISBN: 0-89791-836-3
- MENG W ET AL: "Building Efficient and Effective Metasearch Engines" ACM COMPUTING SURVEYS, ACM, NEW YORK, NY, US, US, vol. 34, no. 1, March 2002 (2002-03), pages 48-89, XP002284747 ISSN: 0360-0300

## Description

The present invention relates to multi-server search technology for executing searches among a plurality of servers in parallel.

The amount of electronic documents (hereafter simply referred to as "documents") that must be managed in the modern office environment is growing in step with greater complexity of operations and an increase in information. Storing locations of documents become more and more disparate, too, due to narrower classifications of information. In such an environment, it is not a simple task to find an intended document from a large amount of documents being managed in various locations.

Document management systems have been proposed to allow easy finding of desired documents. Document management systems are provided with document attribution search functions for searching for documents using attribution information associated with documents, full-text search functions for searching for character strings included in documents, image search functions for searching for images included in documents, and so on.

However, sometimes there are many search servers acting as document management systems. In such cases, the search client can execute a so-called multi-server search by sending queries in a batch to a plurality of search servers.

According to Japanese Patent Application Laid-Open No. 2001-101193, a method is proposed for causing all servers executing a multi-server search to interrupt a search and to acquire the search results at the moment of interruption.

However, it is rare to be able to acquire accurately the desired document with the initial search conditions, even if a search is executed on a plurality of servers in parallel. In other words, hits are received for a large amount of documents with the search conditions, making it necessary to perform a search refinement using new search conditions for the documents for which hits were received.

While it is possible with the invention described in Japanese Patent Application Laid-Open No. 2001-101193 to cause all servers to interrupt the search in the middle of a multi-server search, no effort at all has been made to improve search refinements.

Document EP-A-1 014 282 discloses an information retrieval system for retrieving information from multiple information sources. The information retrieval system provides for the building of dynamic queries through the use of query channels. A query channel permits the passing of attributes of the search results between different queries. The query channel can cause the automatic passing of the attributes, or it can be user controlled (breakpoints). Further, the query results may be transformed so that they are in the context of the target query (computational transformations). For example, the results may be translated or reformatted into a form utilized by the target query. Query channels are created based on graphical representations of queries and their attributes. A simple drag and drop operation, wherein an attribute is selected and dragged to the target query, is used to create the channel. A channel may be created while a query is running. Specification of breakpoints or computational transformations are made using a pop-up window interface that may appear when the channel is selected.

Document US 2004/068486 A1 discloses that a user of a meta-search engine submits a query formulated with operators defining relationships between keywords. Information sources are selected for interrogation by the user or by the meta-search engine. If necessary, the query is translated for each selected source to adapt the operators of the query to a form accepted by that source. The query is submitted to each selected source and answers are retrieved from each source as a summary of each document found that satisfies the query. The answers are post-filtered from each source to determine if the answers satisfy the originally formulated query. Answers that satisfy the query are displayed as a list of selectable document summaries. The analysis includes computing a subsumption ratio of filtered answers to answers received that satisfy a translated query. The subsumption ratio is used to improve the accuracy of subsequent queries submitted by the user to the meta-search engine.

The present invention is characterized by improving the efficiency of search refinements when executing multi-server searches on a plurality of document management systems. Note that other problems will be understood through the entirety of the description.

The present invention is realized, for example, on a document search apparatus as specified in claims 1 to 8.

Furthermore, the present invention is realized, for example, as a document search method as defined in claim 9 and a computer program as defined in claim 10. Further aspects and features of the invention are set out in the dependent claims.

Further features of the present invention will become apparent from the following description of exemplary embodiments (with reference to the attached drawings).
FIG. 1 is a view for describing an overall constitution of a document search apparatus according to an embodiment.
FIG. 2 is a block diagram for describing a hardware constitution of a main unit of the document search apparatus according to the embodiment.
FIG. 3 is a view showing an appearance of the document search apparatus according to the embodiment.
FIG. 4 is a view showing a software constitution of the document search apparatus according to the embodiment.
FIG. 5 is an exemplary block diagram pertaining to the hardware constitution of the document management system according to the embodiment.
FIG. 6 is an exemplary block diagram pertaining to the software constitution of the document management system according to the embodiment.
FIG. 7 is a sequence diagram when executing a search refinement using the document management system.
FIG. 8 is a view showing an example of a data format for a query status stored by the document search apparatus according to the embodiment.
FIG. 9 is a view showing an example of the search result display window according to the embodiment.
FIG. 10 is a view showing an example of an input window for search refinement conditions according to the embodiment.
FIG. 11 is a flowchart of an example of a search method according to the embodiment.
FIG. 12 is a flowchart of an example of a sending method of a request for a search refinement according to the embodiment.
FIG. 13 is a view showing an example of a selection process for a scheme for requesting a search refinement according to the embodiment.

One embodiment of the present invention is described below. Needless to say, the individual embodiment described below will be useful for understanding a variety of concepts, such as the generic concept, median concept, and more-specific concepts of the present invention. The technological scope of the present invention is determined by the scope of the claims, and is not limited in any way by the following individual embodiment.

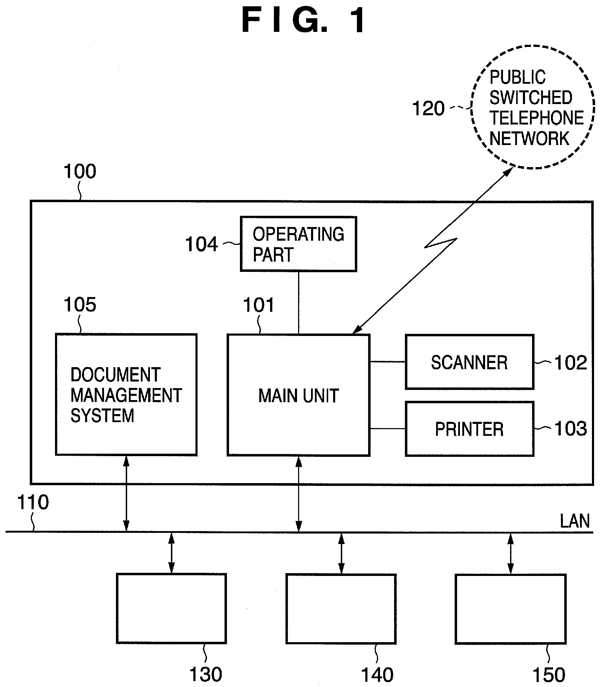

FIG. 1 is a view for describing an overall constitution of a document search apparatus according to the embodiment. A document search apparatus 100 comprises a scanner 102 which is an image input device, a printer 103 which is an image output device, an operating part 104 which is a user interface device, and a main unit 101 for controlling the devices. A document management system 105, comprising functions for saving, managing, and searching through documents, is provided either internally or externally to the document search apparatus 100. The document search system is constituted by this document search apparatus 100, the document management system 105 and the like.

The scanner 102, the printer 103, and the operating part 104 are connected to the main unit 101 via an internal bus. The main unit 101 is connected to communication media such as a LAN 110, a public switched telephone network 120, and the like. The document management system 105 is also connected to the LAN 110. Accordingly, the main unit 101 and the document management system 105 communicate data, commands, and the like via the LAN 110. Note that the LAN 110 may be a wide-area network such as the Internet, for example.

LAN 110 is connected to a plurality of other document management systems 130, 140, and 150. The document search apparatus 100 can send queries not only to the internal document management system 105, but also to the other document management systems 130, 140, and 150, when requesting document searches.

Here, the document search apparatus 100 is constituted so as to be recognized as a single apparatus by an operator. In other words, the document search apparatus 100 is provided with a document copying function, a FAX function, a printer function, and a document storing function, aside from the document search function, in order to be a so-called multifunctional peripheral. Moreover, the document search apparatus 100 may be an ordinary personal computer not comprising a scanner function and a printer function.

The document management system 105 may be generally called a search engine, search server, and database server. The document search apparatus 100 may be generally called a search client and a client computer. The document management systems 130, 140, and 150 may be search engines, portal site servers, and the like on the Internet. In this case, the document search apparatus 100 is a personal computer on which a web browser program operates.

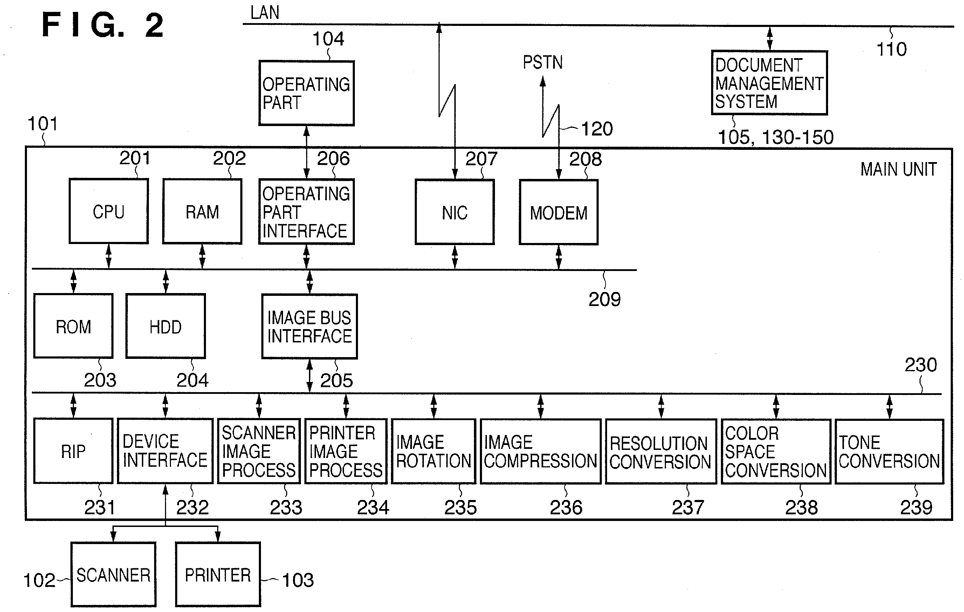

FIG. 2 is a block diagram for describing a hardware constitution of a main unit of the document search apparatus according to the embodiment.

The main unit 101 is a controller for performing input and output of document data, image information, and device information. The main unit 101 realizes the scanning function and the printing function by controlling the scanner 102 and the printer 103. The main unit 101 stores documents to the document management system 105 connected via the LAN 110 and acquires the stored documents through searches. The main unit 101 realizes a fax function by using a public switched telephone network (PSTN) 210. The main unit 101 is connected to the operating part 104 as a user interface and controls the operating part 104.

A CPU 201 is a controller for controlling the entire main unit 101. A RAM 202 is the RAM 202 for enabling the CPU 201 to run. The RAM 202 is, for example, a storage apparatus for saving management queues for managing responses states of results of searches and storing image data, and the like. A ROM 203 is a boot ROM in which is stored a boot program.

A HDD 204 is a large-capacity storage apparatus, such as a hard disk drive. The HDD 204 stores various types of software, image data and attribution data thereof, and other use data, etc. The document search function according the embodiment is realized by system software stored in the HDD 204.

The operating part interface 206 is an interface connecting the operating part (UI) 104 to the CPU 201. The operating part interface 206 outputs image data displayed to a display apparatus provided to the operating part 104. The operating part interface 206 receives information input by an operator (user) using a touch panel and keys provided to the operating part 104 and transmits this to the CPU 201. The results of the searches are displayed to the display device of the operating part 104. The search conditions are input by the user via the operating part 104.

An NIC (network interface card) 207 is a communication unit for communicating with the document management system 105 and external devices such as a personal computer connected on the LAN 110. To this end, the NIC 207 functions as a sending unit or a receiving unit for data and information.

The NIC 207 supports, for example, TCP/IP as a network communication protocol. The CPU 201 performs communication with the document management system 105 according to TCP/IP. The CPU 201 also communicates with the other document management system 130, etc., via the NIC 207.

A modem 208 performs input/output of image information to/from the FAX apparatus via the public switched telephone network 120 using the FAX function. The devices described above are connected with one another via a system bus 209.

An image bus interface 205 functions as a bus bridge for converting data structures. An image bus 230, for transferring image data at high speeds, and the system bus 209 are connected via the image bus interface 205.

The following devices are disposed in the image bus 230. A raster image processor (RIP) 231 expands PDL (page description language) code input from the PC connected to the LAN 110 into a bit map image. A device interface part 232 is an interface device for connecting the scanner 102 and printer 103 with the main unit 101.

A scanner image processing part 233 is a device for correcting, processing, and editing input image data. A printer image processing part 234 is a device for correcting, processing, and editing output image data. An image rotation part 235 is linked to the scanner image processing part 233 and rotates image data read by the scanner 102, stores in the RAM 202, and rotates image data in the RAM 202.

An image compressing part 236 executes, for example, JPEG compression and decompression processes on multilevel image data, and JBIG, MMR, MR, and MH compression and decompression processes on binary image data. A resolution converting part 237 converts the resolution of image data in the RAM 202 and stores this in the RAM 202. A color space converting part 238 converts, for example, YUV images into Lab images using a matrix calculation, and stores this in the RAM 202. A tone converting part 239 converts, for example, 8-bit and 256-scale image data in the RAM 202 into 1-bit and two-scale image data using methods such as an error diffusion process, etc., and stores this in the RAM 202.

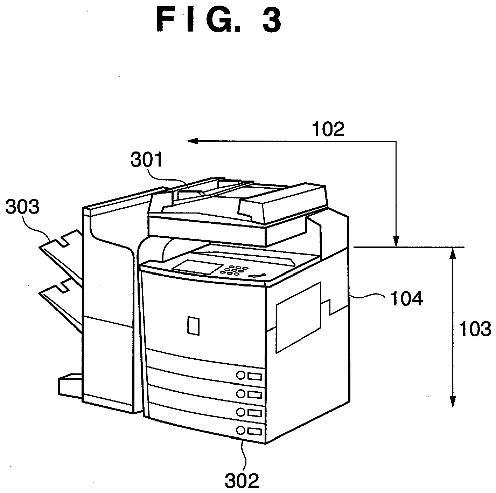

FIG. 3 is a view showing an appearance of the document search apparatus according to the embodiment. As described in FIG. 1, the document search apparatus 100 is a complex machine comprising a document copying function, a fax function, a printer function, and a document management function.

The scanner 102 converts the image into electrical signals as raster image data by shining light on the image on the document paper and scanning the image with CCD line sensors. The document paper is set in a tray in a document feeder 301. When the operator gives a command to read through the operating part 104, the CPU 201 of the main unit 101 commands the scanner 102 to read. The document feeder 301 feeds the document paper one sheet at a time in accordance with the read command.

The printer 103 is an image forming unit for converting raster image data into an image on paper. The image forming system may be an electrophotographic system using a photosensitive drum and photosensitive belt, or it may be an ink jet system for printing the image directly on the paper by discharging ink from a micro nozzle array.

The printer 103 begins the image forming process upon receiving a print command from the CPU 201. The printer 103 comprises a plurality of paper feed cassettes 302 in which are stored paper of different sizes and paper in different orientations. A paper discharge tray 303 receives paper on which image formation is complete. The paper discharge tray 303 executes a sorting process, a stapling process, and the like in accordance with commands from the CPU 201.

Note that since the main unit 101 and the document management system 105 shown in FIG. 1 are disposed inside the document search apparatus 100, they cannot be seen from the external appearance of the document search apparatus 100.

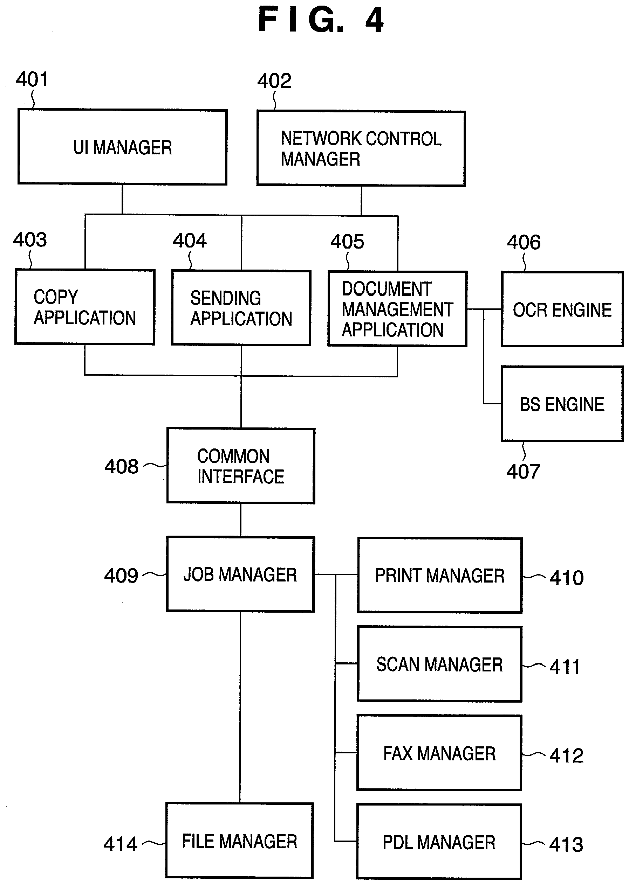

FIG. 4 is a view showing a software constitution of the document search apparatus according to the embodiment. Software modules are stored in the HDD 204.

A UI manager 401 is a module for controlling the operating part 104. For example, the UI manager 401 performs control for communicating operator commands to lower layer modules and displaying information form the lower layer modules to the operating part 104.

A network control manager 402 controls the NIC 207 in order to receive commands and information from the LAN 110 and sending commands and information from the main unit 101.

A copy application 403 receives a copy command from the UI manager 401 and sends a copy job to a job manager 409. A sending application 404 receives a send command from the UI manager 401 and sends a send job to the job manager 409.

A document management application 405 realizes the document management function by sending and receiving information and commands to and from the document management system 105. The document management application 405 executes, for example, requests for search refinement, reception of results of searches, management of response states of results of searches. The document management application 405 is connected to an OCR engine for extracting text information included in document images and a block selection engine 407 for trimming image regions from document images.

A common interface 408 is an interface for absorbing device dependencies with regard to device control of the scanner 102, printer 103, and so on.
The job manager 409 organizes job data received from the common interface 408 and sends necessary commands to the various control managers for controlling lower layer devices. For example, upon reception of a copy job, the job manager 409 sends a read command to a scan manager 411 and sends an image formation command to a print manager 410. Note that the print manager 410 is a module for controlling the printer 103. The scan manager 411 is a module for controlling the scanner 102.

If a fax sending job is received, the job manager 409 transmits the necessary commands to the scan manager 411, a file manager 414, and a fax manager 412. The file manager 414 is a module for managing document files. The fax manager 412 is a module for controlling a modem 208.

If a PDL print job is received in LIPS or PostScript, the job manager 409 sends the necessary commands to the PDL manager 413, the file manager 414, and the print manager 410. The PDL manager 413 controls the RIP 231 and converts the PDL data into raster image data.

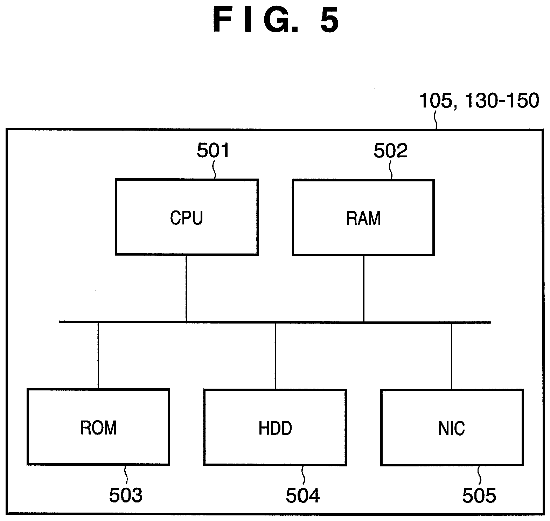

FIG. 5 is an exemplary block diagram pertaining to the hardware constitution of the document management system according to the embodiment.

The CPU 501 is a control unit for providing general control of all the units in the document management system based on the computer programs. A RAM 502 is a volatile storage unit acting as a work area. A ROM 503 is a non-volatile storage unit for storing firmware and other control programs. A hard disk drive (HDD) 504 is a large-capacity storage unit. A communication interface (NIC) 505 is a communication unit such as a network interface card.

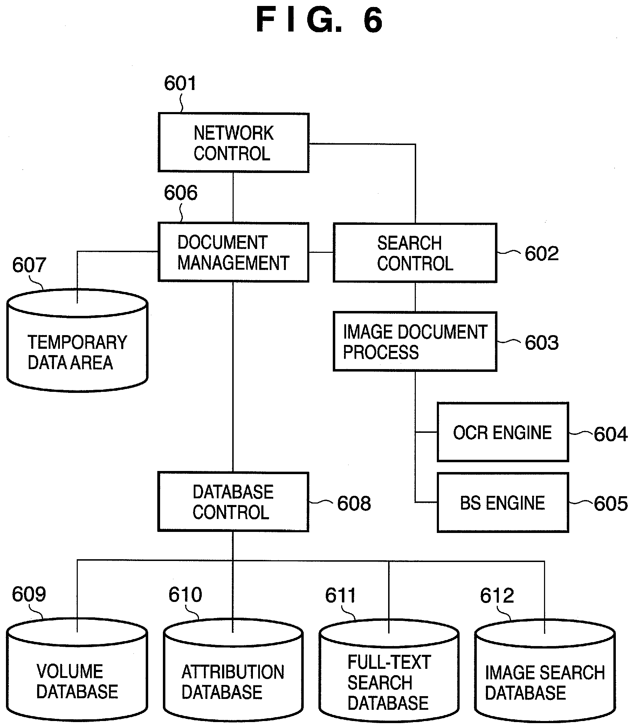

FIG. 6 is an exemplary block diagram pertaining to the software constitution of the document management system according to the embodiment. The document management systems 105 and 130-150 provide a variety of functions such as storage, acquisition, and searching of documents.

A network control module 601 controls the NIC 505 to communicate with the network control manager 402 of the main unit 101. For example, the network control module 601 receives queries and identification information (search ID) for identifying queries from the document search apparatus 100 and sends results of searches to the document search apparatus 100.

A search control module 602 executes searches according to queries from the main unit 101 and creates search indices for stored documents. Note that the search control module 602, upon receiving a search refinement request accompanied by identification information, may execute a search refinement on the basis of results of searches stored in a temporary data area 607 after a search has been executed ahead of time. In this case, the search control module 602 associates and stores the results of the search and the identification information ahead of time in the temporary area 607.

An image document processing module 603 creates thumbnail images from documents and executes image conversion as needed. The image document processing module 603 also extracts search indices from documents. In other words, the image document processing module 603 converts documents into a more easily processable format and extracts search indices and text information using the OCR engine 604. The image document processing module 603 uses the block selection engine 605 to extract image regions contained in the documents.

A document management module 606 allocates processes relating to all document management to the various modules. The temporary data area 607 is a storage location for temporary data used by the document management system 105, etc.

A database control module 608 creates, stores, and deletes, etc. data saved in databases 609-612. The database control module 608 reads data from the corresponding database according to requests from the main unit 101 and creates documents to be passed to the main unit 101 from the read data.

A volume database 609 is a database for storing actual documents. The volume database 609 is a conceptual thing, and may in actuality be a file system in the OS. An attribution database 610 is a database for saving information pertaining to attributions such as a document's name, date of creation, comments, and the like. In a full-text search database 611 are registered search indices created from text data of documents registered in the volume database 609. When the main unit 101 gives a command for a full-text search, the search control module 602 searches the full-text search database.

In an image search database 612 is registered characteristic data clipped from documents registered in the volume database 609 in association with the documents. When the main unit 101 gives a command for an image search, the search control module 602 searches the image search database 612 in accordance with the characteristics of the search target image, and extracts the document associated with those characteristics.

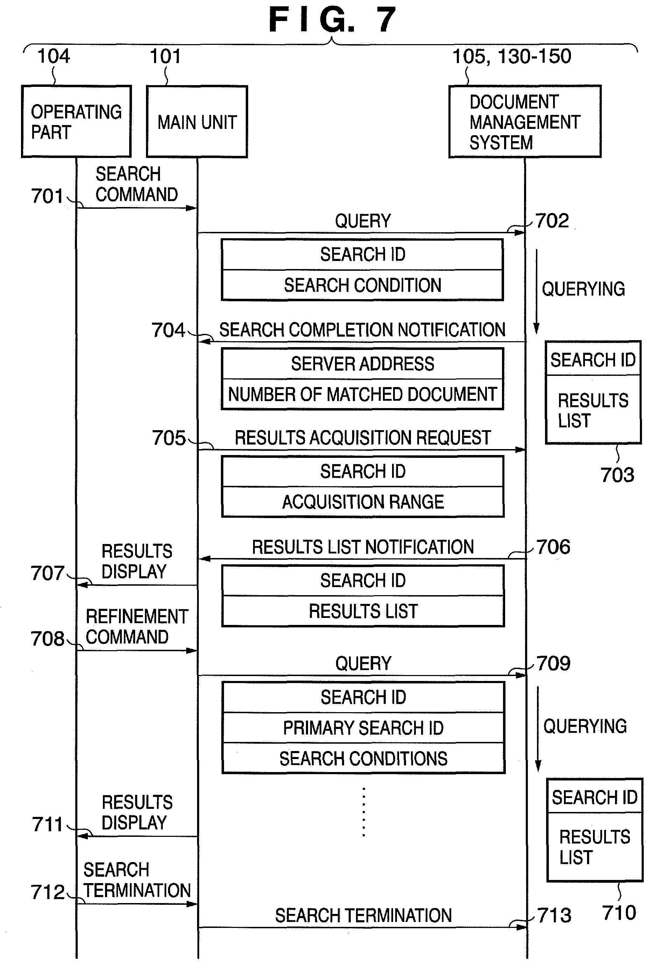

FIG. 7 is a sequence diagram when executing a search refinement using the document management system. Here, a search is requested of the document management system 105 of the plurality of document management systems. Note that when a multi-server search is executed, a query with the same search conditions is sent to each document management system.

When a search command 701 with search conditions is input to the main unit 101 from the operating part 104 according to an operator operation, the CPU 201 sends a query 702 to the document management system 105 from the NIC 207. When, as a software operation, the UI manager receives the search command 701 with search conditions, the UI manager passes this to the document management application 405. The document management application 405 creates the query 702 accompanied by the search conditions and passes this to the network control manager 402 together with the network address of the document management system 105. The network control manager 402 sends the query 702 to the document management system 105 in accordance with the network address.

The parameters included in the query 702 include, for example, identification information (hereafter called a "search ID") for identifying other queries from this query, and the search conditions input from the operating part 104. The search ID must be unique, and therefore it is desirable that the CPU 201 select it based on the network address, etc.

Upon reception of the query 702 through the NIC 505, the CPU 501 of the document management system 105 executes the search according to the query 702. As regards the software, the search control module 602 receives the query 702 via the network control module 601 and searches the various databases in accordance with the search conditions included in the query 702.

Note that the CPU 501 (the search control module 602) creates temporary data 703 from the results of the search and the search ID and stores this in the temporary data area 607 set aside in the HDD 504. The CPU 501 (the search control module 602) deletes the temporary data 703 either when it receives a search termination command 713 or once the time-out period set ahead of time has elapsed.

The CPU 501 (search control module 602) generates a search completion notification 704 and sends this to the document search apparatus 100 which requested the search. The parameters of the search completion notification 704 are, for example, the address of the document management system 105, the number of matched documents (number of hits), the attribution information of the documents which received hits, and so on. The number of matched documents may be called the number of results of the search.

The search completion notification 704 does not contain any actual data from the results of the search. Therefore the CPU 201 (document management application 405) of the main unit 101 sends an acquisition request 705 for the results of the search to the document management system 105 in order to receive the actual data (the actual document(s)). At this time, the CPU 201 sends the acquisition request 705, designating the needed range within the results of the search (e.g., hits 20 to 60, etc.). This range can be designated via the operating part 104. The acquisition request 705, it goes without saying, includes the search ID.

The CPU 501 (search control module 602) of the document management system 105, upon receiving the acquisition request 705, reads the corresponding results of the search from the temporary data area 607 based on the search ID accompanying the acquisition request 705. Note that when the range is designated, the CPU 501 (search control module 602) extracts only those results of the search corresponding to this range from the temporary data 703.

The CPU 501 (search control module 602) creates a results list notification 706 and sends this to the document search apparatus 100. The results list notification 706 includes the search ID for distinguishing the query and a list of the results of the search.

The CPU 201 (document management application 405) of the document search apparatus 100, upon reception of the results list notification 706, creates display data 711 of the results of the search and outputs this to the operating part 104. With this, the results of the search are displayed to the display apparatus of the operating part 104.

Note that the operating part 104 performs multi-task operation. For this reason, even in an environment with a plurality of document management systems, the operating part 104 displays the results of the searches from the various document management systems in the order they are received. In other words, even before receiving the results of the searches from all the document management systems, display is begun of those results of the search which have already been received.

At this point, if a refinement command 708 accompanying search refinement conditions based on the results of the search already executed is input into the CPU 201 from the operating part 104, the CPU 201 creates a search refinement request 709 and sends this to the document management system 105. The parameters of the search refinement request 709 include, for example, a newly issued search ID, a primary search ID for specifying the past query 702, and the additional search conditions for refining the search. The primary search ID must, it goes without saying, match the ID contained in the query 702.

The CPU 501 (search control module 602) of the document management system, upon reception of the search refinement request 709, extracts the primary search ID from the search refinement request 709 and reads the results of corresponding past searches from the temporary data area 607. Furthermore, the CPU 501 (search control module 602) executes a search refinement based on the results of past searches in accordance with the additional search conditions extracted from the search refinement request 709. The CPU 501 creates new temporary data 710 including these results of the search and stores this in the temporary data area 607. Note that the CPU 501 may delete the original temporary data 703 at this point of time.

Thereafter, as with the original results of the search, the search completion notification 704, the acquisition request 705, and the results list notification 706 for the results of the search refinement are sent and received. The display data 711 for the results of the search refinement are displayed to the display apparatus of the operating part 104.

If the operator gives a command to once again perform a search refinement, then the series of search refinement processes described above is repeated (708-711).

In the end, when a search termination command 712 is input to the CPU 201 from the operating part 104, the CPU 201 sends the search termination command 713 to the document management systems. The CPU 501 of the document management system deletes from the temporary data area 607 the temporary data 703 and 710, which is the series of results of the searches pertaining to the document search apparatus 100 which sent the search termination command 713.

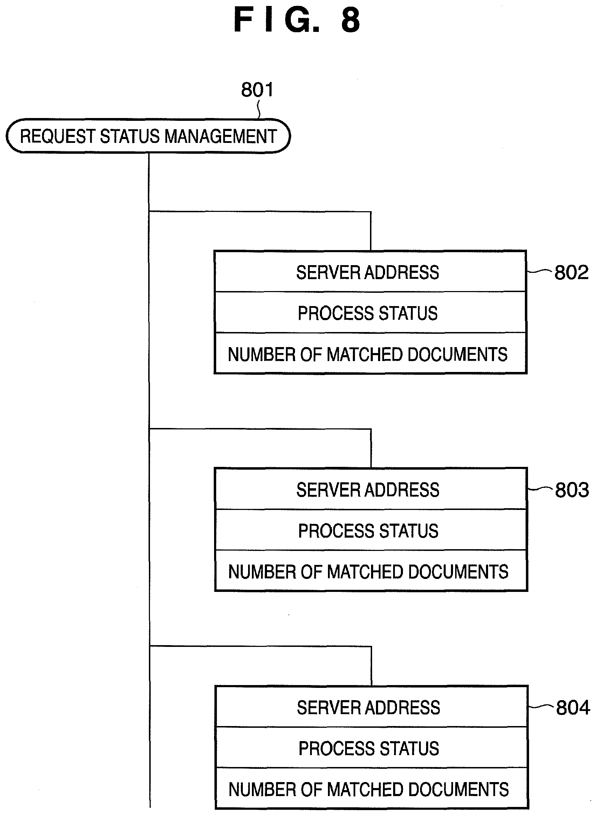

FIG. 8 is a view showing one example of a data format for a response state of the results of a search stored by the document search apparatus according to the embodiment. The CPU 201 (document management application 405) stores in the RAM 202 data for managing the response state of results of searches in searches requested of the document management systems.

801 is a management queue. The response states of the results of the searches of the present embodiment are managed using the management queue 801. In other words, the CPU 201 stacks managed data 802, 803, and 804 in the management queue 801 for each document management system which is a query destination, every time a query is generated.

The managed data stacked in the queue is, for example, the address of the document management system, the response state, the number of matched documents, and so on. The address of the document management system may be in any form so long as it is unique, for example, a network address. The response state is, for example, data pertaining to the search status, such as "querying" or "search complete," etc. The number of matched documents is the number of documents receiving hits in the search (so-called the number of hits).

In the present embodiment, a method is adopted for placing managed data in the management queue 801 when queries arise, but the present invention is not limited to this. For example, when a query is received, the CPU 201 may place the managed data in the management queue. In this case, only that data regarding queries for which results of searches have come back are stacked in the management queue when a query is broadcast. There is thus the benefit of being able to simply identify queries for which there have been responses of results of searches.

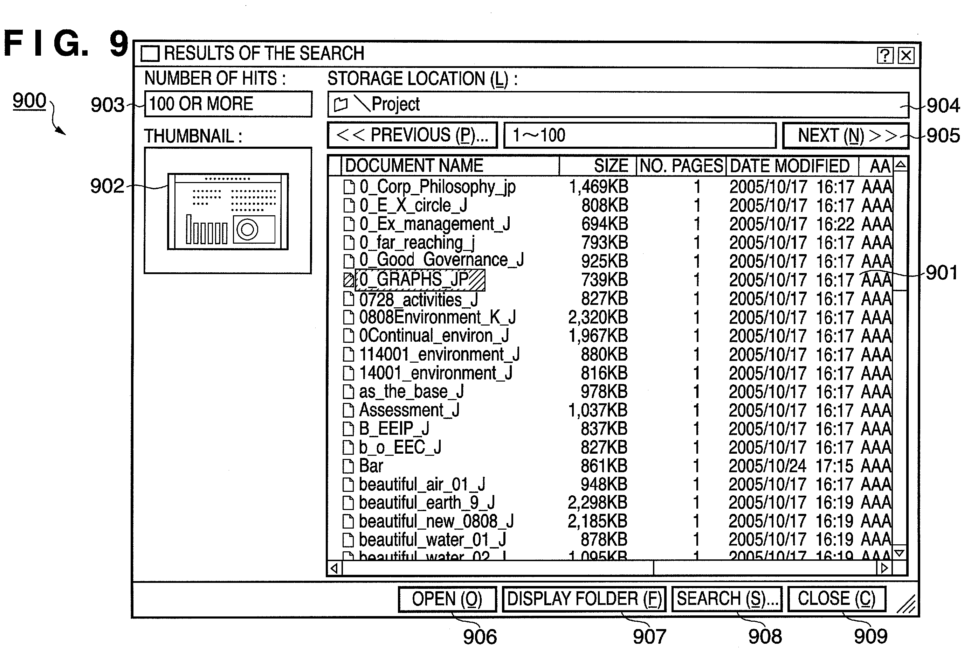

FIG. 9 is a view showing an example of the search result display window according to the present embodiment. A window 900 for displaying the results of searches is displayed to the display apparatus of the operating part 104. As described above, the operating part 104 employs a touch panel, and a variety of functions related to searches are executed by operating buttons 905-909 displayed to the window 900.

A display region 901 for the results of searches is a region for displaying a list of documents to which apply the search conditions. The operator can select the desired document in the display region 901.

A thumbnail display region 902 is a region for displaying thumbnail images of the currently selected document. A display region 903 for the number of matched documents is a region for displaying the total number of documents to which apply the search conditions. A display region 904 for storage locations is a region for displaying information on the storage location of the currently selected document.

A next button 905 is a button activated when the maximum number of matched documents displayable in the display region 901 is exceeded, and is a button for acquiring and displaying other documents from the document management system which exceed the maximum number. For example, let us assume that the number of matched documents is 800, and that numbers 200 through 300 are currently displayed in the display region 901. In this case, when the next button 905 is operated, the CPU 201 sends the acquisition request 705 to the document management system in order to acquire the results of the searches for numbers 300 through 400. The CPU 201 then displays the results of the searches for the acquired numbers 300 through 400 to the display region 901.

An open button 906 is a button for commanding a preview display of the currently selected document. A folder display button 907 is a button for displaying a folder in which the selected document is stored. A search button 908 is a button for commanding a search refinement on the results of the current search. For example, if it is detected that the search button 908 has been operated, the CPU 201 displays to the operating part 104 a dialog box, for example, in order to input additional search conditions used in the search refinement. A close button 909 is a button for commanding that the search be terminated. For example, if the close button 909 is operated, the CPU 201 displays to the operating part 104 the initial window.

When a query is sent to a plurality of document management systems, the CPU 201 displays the window 900 as soon as the results of the search are returned from at least one document management system. Thereafter, every time results of a search are received from other document management systems, the CPU 201 updates the window 900 in real time.

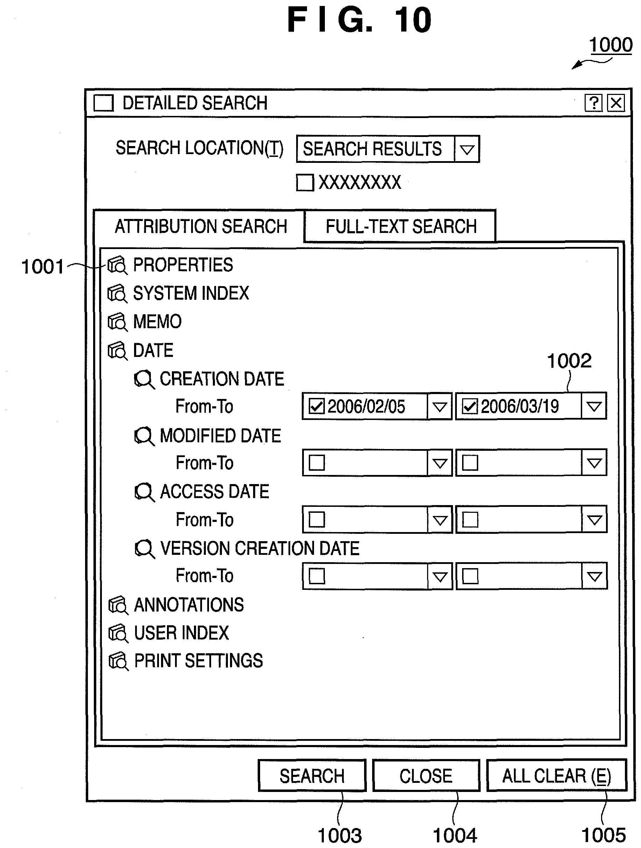

FIG. 10 is a view showing an example of an input window for search refinement conditions according to the embodiment. An input window 1000 for inputting search conditions is displayed when the search button 908 in the window 900 is pressed.

A display region 1001 is a region for showing categories of search conditions. In the present embodiment, categories of "properties" indicating document attribution information such as document name and document owner and "system index" which allows addition of any attributions by the operator are provided. The operator inputs items he or she wishes to designate as search conditions from among the various categories.

For example, if "date" is selected as a category, the CPU 201 displays a search item 1002 belonging to the selected category. The operator can input the search conditions for each displayed item. In FIG. 10, the condition of the date of creation is input.

A search button 1003 is a button for commanding that a search be executed. A close button 1004 is a button for terminating a search refinement. When the close button 1004 is pressed, the CPU 201 closes the input window 1000 and displays the window 900 to the front. An all-clear button 1005 is a button for clearing all input conditions.

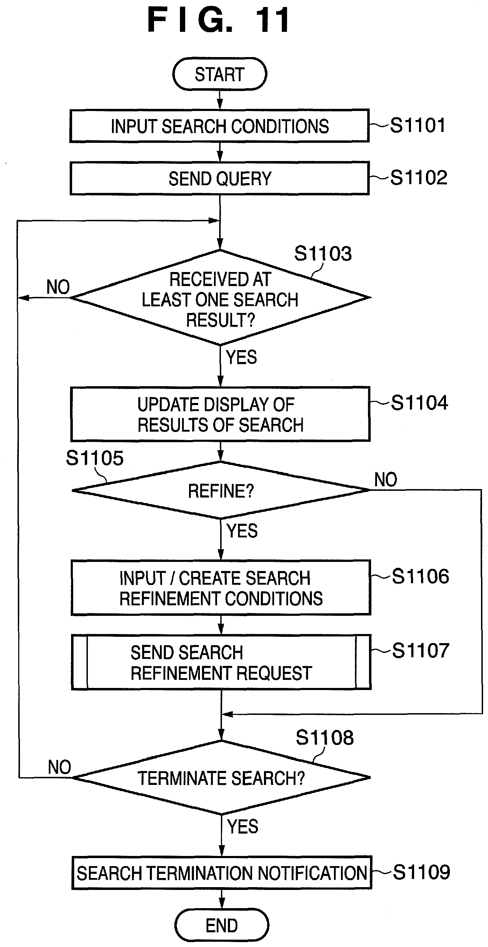

FIG. 11 is a view showing a flowchart of an example of a search method according to the embodiment. Note that this search method is executed mainly by the document management application 405.

In step S1101, the CPU 201 receives input of search conditions for causing the plurality of document management systems 105 and 130-150 to execute a document search in parallel. The content of the search conditions is specified in accordance with the operations of the operator in the operating part 104 as described above. Note that in the first embodiment, search conditions are created based on character strings input by the user in the operating part 104, but other methods may be used. For example, an image on a document could be read and input as image data by the scanner 102, and the image search described above performed based on the image data. Search conditions could be created based on the text data extracted by the OCR engine 604 described above from the image read by the scanner 102.

In step S1102, the CPU 201 creates a query to which are attached the input search conditions and a unique search ID, and sends this to the document management systems.

In step S1103, the CPU 201 stands by until at least one result of the search is received. When at least one result of the search is received, the process moves to step S1104. Note that if no new results of the search are received when the window 900 is displayed to the operating part 104, the process may move to S1105.

In step S1104, the CPU 201 acquires and displays the results of the search to the display apparatus of the operating part 104. As described above, the CPU 201 updates the window 900 every time a new result of the search is received.

In step S1105, the CPU 201 determines whether or not a command has been given through the operating part 104 to perform a search refinement. As described above, the CPU 201 detects that the search button 908 provided to the window 900 has been operated. If no command is given for a search refinement, then the process moves to step S1108. Note that here whether or not to perform a search refinement is determined based on a command from the user, but settings may be made to automatically perform search refinements when the number of hits in the results of the search received in S1103 is equal to or greater than a pre-determined number. In this case, the date of creation or information for limiting the search destination (document management system) needs to be set ahead of time as search conditions for the search refinement.

When a command is given for a search refinement, in step S1106 the CPU 201 receives the additional conditions for the search refinement received via the operating part 104.

Note that when a result of the search is received from at least one document management system, the CPU 201 may create search conditions for the search refinement based on the result of the search. The input of conditions for search refinement is thus made easier.

In step S1107, the CPU 201 sends a request for search refinement regardless of whether or not results of a search have been received from all the document management systems. Note that the CPU 201 may change or select the scheme for requesting the search refinement according to the response state for the results of the search from the various document management systems. See below for details on the scheme for requesting a search refinement.

In step S1108, the CPU 201 determines whether or not a command has been given through the operating part 104 to terminate the search. If no command has been given to terminate the search, then the process returns to step S1103.

On the other hand, if a command has been given to terminate the search, the process moves to step S1109 and the CPU 201 sends the search termination command 713 to the document management systems.

According to the present embodiment, a search refinement can be executed without waiting for the results of the search to be received from all the plurality of document management systems. The process efficiency of the search refinement can thus be improved in multi-server searches.

By creating conditions for search refinements using the received results of the search, inputting of conditions for search refinements is made easier.

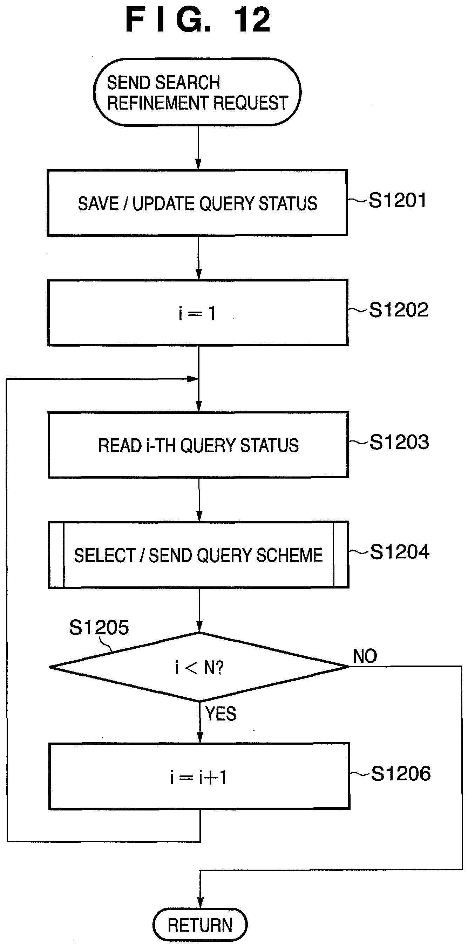

FIG. 12 is a flowchart of an example of a sending method for request for a search refinement according to the embodiment. The sending method for a request for a search refinement is a subroutine of step S1107 described above.

In step S1201, the CPU 201 saves the management queue 801 for managing the response state of the results of the search for each document management system to the RAM 202. Note that when the response state is changed, such as when a result of the search is returned, etc., the CPU 201 updates the managed data registered in the management queue 801 for the corresponding document management system.

In step S1202, the CPU 201 initializes the index for distinguishing the document management systems (i being a natural number from 1 to N; N being the total number of document management systems).

In step S1203, the CPU 201 reads the managed data from the management queue 801 for the i-th document management system. In step S1204, the CPU 201 selects a requesting scheme for the search refinement according to the response state indicated by the managed data, and sends the request for search refinement.

In step S1205, it is determined whether or not a scheme for requesting a search refinement has been selected for all document management systems. If selection and sending are not finished, the process returns to S1203 after the index i is incremented in step S1206. If selection and sending are finished, the process moves to the main flowchart.

According to the present embodiment, it is possible to change the scheme for requesting a search refinement for each document management system according to the response state by saving the response state from each document management system ahead of time. The responses of the results of the search from the document management systems are expected to differ in terms of search time in accordance with differences in search speed and the number of registered documents in the databases. The search efficiency is even further improved by selecting an optimal response method according to the response state.

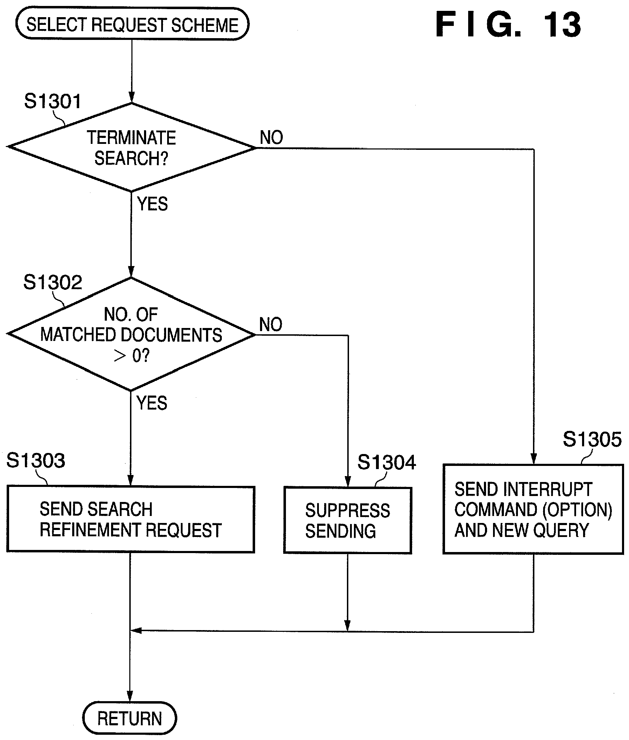

FIG. 13 is a flowchart of an example of a selection process for a scheme for requesting a search refinement according to the embodiment. This selection process is a subroutine of step S1204 described above.

In step S1301, the CPU 201 determines whether or not the response state of the desired document management system is "search terminated" (not querying; in other words the results of the search have been returned) based on the managed data 802-804.

If not querying, the process moves to step S1302, and the CPU 201 determines whether or not the number of documents (number of matched documents) extracted by the document management system is one or more.

If the number of matched documents is one or more, the process moves to step S1303, and the search refinement request 709 is sent to the document management system. The address of the document management system is assumed to be registered ahead of time in the managed data as described above. Moreover, a search ID generated newly by the CPU 201 is added to the search refinement request.

On the other hand, if the number of matched documents is 0, the process moves to step S1304, and the CPU 201 and sending of a search refinement request to the document management system is suppressed (prohibited or skipped). This is because requesting a search refinement of a document management system in which the number of matched documents is 0, or in other words, there are no documents which receive hits, will result in zero results, naturally, so it is possible to omit wasteful queries by making the above determination.

In Step S1301, if the determination is "search uncompleted" (querying; in other words, the results of the initially requested search have not been returned), the process moves to step S1305. In step S1305, the CPU 201 creates new search conditions with conditions added for a search refinement on the original search conditions, and this is sent as a new query to the document management systems being queried. Note that a search ID generated newly by the CPU 201 is added to the new query.

Also note that in step S1305, the CPU 201 may send a command to interrupt a search to the document management systems determined to be querying. The search interrupt command is preferably able to terminate a search process with diminished value. A search ID is preferably attached in the search interrupt command in order to specify the interrupted query.

With the present embodiment, search efficiency is further improved by sending the original search ID and the search refinement conditions to the document management systems for which the search is complete and there is one or more matching documents. In other words, the results of the searches based on the original search are stored in the temporary data area 607, and therefore executing a search refinement on these results of the search allows execution of a faster search process than normal. As described in FIG. 7, the original results of the search can be specified by the search ID, which is identification information.

Moreover, execution of wasteful searches can be suppressed by not sending a search refinement request for document management systems for which the search is complete and the number of matched documents is 0.

Further, search refinement can be executed more efficiently by creating new search conditions with the search refinement conditions added to the original search conditions to the document management systems for which search is uncompleted. In other words, search efficiency is improved since a search refinement can substantially be executed without waiting for the original results of the search.

Note that in document management systems for which a search is not terminated, or in other words, to which "search uncompleted" applies, the search process ordinarily remains executed for the initial query. For this reason, requesting search refinement causes two searches to be executed in parallel, without waiting for the original results of the search. This increases the processing load of the document management system, and therefore is not preferable. Of course, it goes without saying that the time for the search refinement to complete is slower. Accordingly, giving an instruction to interrupt the first query improves the efficiency of the search refinement and lightens the load of the document management system.

### Other Embodiments

A few different embodiments have been discussed, and the present invention may be applied to a system constituted from a plurality of devices or applied to an apparatus made up of a single device. For example, this includes scanners, printers, personal computers, copiers, multifunctional peripheral, and fax devices.

The present invention may be achieved by directly or remotely supplying a software program to realize the various functions of the embodiment described above to a system or apparatus, the computer included in that system, etc., reading and executing the supplied program code.

Accordingly, in order to realize the functions and processes of the present invention on a computer, the program code installed on a computer itself realizes the present invention. In other words, a computer program for realizing the functions and processes is itself the present invention.

In this case, the format of the program does not matter, and may be object code, a program executed by an interpreter, script data supplied to an OS, etc., as long as the functions of the program are provided.

As a storage medium for supplying the program, there are, for example, flexible disks, hard disks, optical disks, magnetooptical disks, MO, CD-ROM, CD-R, CD-RW, and so on. As storage media, there are magnetic tape, non-volatile RAM 202 cards, ROM, DVD (DVD-ROM, DVD-R), etc.

The program may be downloaded from an Internet website using a browser on a client computer. In other words, the computer program of the present invention or a compressed file containing an automatic install function may be downloaded from the website to a hard disk or other storage medium. The program code constituting the program of the present invention may be divided among a plurality of files and realized by downloading the files from different websites. In other words, even WWW servers which allow a plurality of operators to download the program files for realizing the functions and processes of the present invention on a computer may also be a constituent element of the present invention.

Further, the program of the present invention may be encrypted and stored on a CD-ROM or other storage medium and distributed to operators. In this case, it is possible to allow only operators who have cleared prescribed conditions to download key information for decryption from a website via the Internet, execute decryption of the encrypted program using that key information, and install the program on a computer.

The functions of the embodiment described above may also be realized by executing the program read by the computer. Moreover, all or part of the actual processes may be performed by the OS running on the computer, based on the commands of the program. Needless to say, the functions of the embodiment described above can be realized in this case, too.

Moreover, the program read from the storage medium may be written to the RAM 202 provided to a function extension board inserted in the computer or a function extension unit connected to the computer. All or part of the actual processes may be performed by the CPU provided to the function extension board or the function extension unit based on the commands of the program. The functions of the embodiments described above are thus realized.

With the present invention, the efficiency of search refinements when executing multi-server searches on a plurality of document management systems can be improved.

While the present invention has been described with reference to exemplary embodiments, it is to be understood that the invention is not limited to the disclosed exemplary embodiments. The scope of the following claims is to be accorded the broadest interpretation so as to encompass all the disclosed modifications and equivalent structures and functions.

## Claims

1. A document search apparatus (100) which causes a plurality of document management systems (105, 130, 140, 150) to execute a document search in parallel, and which comprises:
a sending unit (207) which is adapted to send a first query to each of said plurality of document management systems, the first query regarding a first search condition which is input, and
a receiving unit (207) which is adapted to receive a result of the search for the first query from each of said plurality of document management systems, and
the apparatus being **characterized by**:
a search control unit (101) which causes said sending unit to send a second query comprising a search refinement condition which is input for requesting search refinement for the first query to at least one of the document management systems before receiving the result of the search from all of the document management systems and after receiving the result of the search from at least one of the document management systems, wherein the search refinement condition is automatically set when a number of hits in the results of the search received by the receiving unit (107) is equal to or greater than a pre-determined number, based on information for limiting the search set in advance,
wherein said search control unit comprises
a management unit which manages a response state of each of said document management systems; and
a selection unit which selects a scheme for requesting the second query of at least one of the document management systems according to the response state managed by said management unit,
wherein said search control unit causes said sending unit to send the second query to at least one of the document management systems by using the scheme selected by said selection unit,
wherein the second query causes said at least one of the document management systems to execute a search refinement with the search refinement condition according to the selected scheme, and
wherein the receiving unit is further adapted to receive a result of the search for the second query from said at least one of the second document management systems.

2. The document search apparatus according to claim 1, wherein said selection unit selects a scheme for not sending the second query for search refinement to said document management systems in a case where the response state of said document management systems indicates that the search is terminated and the number of hits is zero.

3. The document search apparatus according to claim 1, wherein said selection unit selects a scheme for sending the second query accompanied by identification information for identifying results of the search from the first query and a second search condition for search refinement based on the results of the search from the first query to said document management systems in a case where the response state of said document management systems indicates that the search is terminated and the number of hits is one or more.

4. The document search apparatus according to claim 1, wherein said selection unit selects a scheme for sending the second query accompanied by a third search condition in which a search condition for search refinement is added to the first search condition to said document management systems in a case where the response state of said document management systems indicates that the search is uncompleted.

5. The document search apparatus according to claim 4, wherein said sending unit sends an interrupt command for interrupting a search process originating in the first query, when sending the second query to said document management systems in a case where the response state of said document management systems indicates that search is uncompleted.

6. The document search apparatus according to claim 1, further comprising a creation unit which creates a search condition for the search refinement based on a result of the search when receiving the result of the search from said at least one of the document management systems.

7. The document search apparatus according to claim 1, further comprising an accepting unit which accepts from a user or a user apparatus information for creating search conditions for the search refinement,
wherein said creation unit creates the search conditions for search refinement based on information accepted by said accepting unit.

8. A document search system, comprising said document search apparatus according to claim 1 and a plurality of document management systems.

9. A document search method which causes a plurality of document management systems (105, 130, 140, 150) to execute a document search in parallel, and which comprises the steps of:
sending a first query to each of said plurality of document management systems (105, 130, 140, 150), the first query regarding a first search condition which is input, and
receiving results of the search for the first query from each of said plurality of document management systems (105, 130, 140, 150); and,
the method being **characterized by** the steps of:
sending a second query comprising a search refinement condition which is input for requesting search refinement for the first query to at least one of the document management systems before receiving the result of the search from said all of the document management systems and after receiving the results of the search from at least one of the document management systems, wherein the search refinement condition is automatically set when a number of hits in the results of the search received by the receiving unit (107) is equal to or greater than a pre-determined number, based on information for limiting the search set in advance,
managing a response state of each of said document management systems (105, 130, 140, 150); and
selecting a scheme for requesting the second query of at least one of the document management systems according to the managed response state,
sending the second query to at least one of the document management systems by using the selected scheme,
wherein the second query causes said at least one of the document management systems to execute a search refinement with the search refinement condition according to the selected scheme, and
receiving a result of the search for the second query from said at least one of the document management systems.

10. A computer program stored in a computer-readable medium for causing a plurality of document management systems (105, 130, 140, 150) to execute a document search in parallel, wherein, when the computer program is executed by a computer of the document management system, the computer is caused to execute the steps of:
sending a first query to each of said plurality of document management systems (105, 130, 140, 150), the first query regarding a first search condition which is input, and
receiving results of the search for the first query from each of said plurality of document management systems (105, 130, 140, 150); and,
**characterized by** the steps of:
sending a second query comprising a search refinement condition which is input for requesting search refinement for the first query to at least one of the document management systems before receiving the result of the search from said all of the document management systems and after receiving the results of the search from at least one of the document management systems, wherein the search refinement condition is automatically set when a number of hits in the results of the search received by the receiving unit (107) is equal to or greater than a pre-determined number, based on information for limiting the search set in advance,
managing a response state of each of said document management systems (105, 130, 140, 150); and
selecting a scheme for requesting the second query of at least one of the document management systems according to the managed response state,
sending the second query to at least one of the document management systems by using the selected scheme,
wherein the second query causes said at least one of the document management systems to execute a search refinement with the search refinement condition according to the selected scheme, and
receiving a result of the search for the second query from said at least one of the document management systems.

## Patentansprüche

1. Dokumentensuchvorrichtung (100), die eine Vielzahl von Dokumentenverwaltungssystemen (105, 130, 140, 150) veranlasst, eine Dokumentensuche parallel auszuführen, und die aufweist:
eine Sendeeinheit (207), die dazu angepasst ist, eine erste Anfrage an jede der Vielzahl von Dokumentenverwaltungssystemen zu senden, wobei die erste Anfrage eine erste Suchbedingung, die eingegeben wird, betrifft, und
eine Empfangseinheit (207), die dazu angepasst ist, ein Ergebnis der Suche für die erste Anfrage von jeder der Vielzahl von Dokumentenverwaltungssystemen zu empfangen, und
**gekennzeichnet durch**:
eine Suchsteuerungseinheit (101), die die Sendeeinheit veranlasst, eine zweite Anfrage mit einer Suchverfeinerungsbedingungen, die eingegeben wird, zu senden, um eine Suchverfeinerung für die erste Anfrage bezüglich zumindest einem der Dokumentenverwaltungssysteme anzufordern, vor einem Empfangen des Ergebnisses der Suche von allen Dokumentenverwaltungssystemen und nach einem Empfangen des Ergebnisses der Suche von zumindest einem der Dokumentenverwaltungssysteme, wobei die Suchverfeinerungsbedingung automatisch eingestellt wird, wenn eine Anzahl von Treffern in den Ergebnissen der Suche, die **durch** die Empfangseinheit (107) empfangen wird, gleich oder größer als eine vorbestimmte Anzahl ist, basierend auf Informationen zum Begrenzen der Suche, die im Voraus eingestellt sind,
wobei die Suchsteuerungseinheit aufweist
eine Verwaltungseinheit, die einen Antwortzustand von jedem der Dokumentenverwaltungssysteme verwaltet; und
eine Auswahleinheit, die ein Schema zum Anfordern der zweiten Anfrage von zumindest einem der Dokumentenverwaltungssysteme gemäß dem Antwortzustand, der **durch** die Verwaltungseinheit verwaltet wird, auswählt,
wobei die Suchsteuerungseinheit die Sendeeinheit veranlasst, die zweite Anfrage an zumindest eines der Dokumentenverwaltungssysteme zu senden, unter Verwendung des **durch** die Auswahleinheit ausgewählten Schemas,
wobei die zweite Anfrage das zumindest eine der Dokumentenverwaltungssysteme veranlasst, eine Suchverfeinerung mit der Suchverfeinerungsbedingung gemäß dem ausgewählten Schema auszuführen, und
wobei die Empfangseinheit weiterhin dazu angepasst ist, ein Ergebnis der Suche für die zweite Anfrage von dem zumindest einen der zweiten Dokumentenverwaltungssysteme zu empfangen.

2. Dokumentensuchvorrichtung gemäß Anspruch 1, wobei die Auswahleinheit ein Schema auswählt, um eine zweite Anfrage für eine Suchverfeinerung an die Dokumentenverwaltungssysteme nicht zu senden, in einem Fall, in dem der Antwortzustand der Dokumentenverwaltungssysteme angibt, dass die Suche beendet ist und die Anzahl von Treffern gleich Null ist.

3. Dokumentensuchvorrichtung gemäß Anspruch 1, wobei die Auswahleinheit ein Schema zum Senden der zweiten Anfrage, die von Identifikationsinformationen zum Identifizieren von Ergebnissen der Suche von der ersten Anfrage und einer zweiten Suchbedingung für eine Suchverfeinerung basierend auf den Ergebnissen der Suche von der ersten Anfrage begleitet wird, an die Dokumentenverwaltungssysteme auswählt, in einem Fall, in dem der Antwortzustand der Dokumentenverwaltungssysteme angibt, dass die Suche beendet ist und die Anzahl von Treffern gleich eins oder mehr ist.

4. Dokumentensuchvorrichtung gemäß Anspruch 1, wobei die Auswahleinheit ein Schema zum Senden der zweiten Anfrage, die durch eine dritte Suchbedingung begleitet wird, in der eine Suchbedingung für eine Suchverfeinerung zu der ersten Suchbedingung hinzugefügt ist, an die Dokumentenverwaltungssysteme auswählt, in einem Fall, in dem der Antwortzustand der Dokumentenverwaltungssysteme angibt, dass die Suche unvollständig ist.

5. Dokumentensuchvorrichtung gemäß Anspruch 4, wobei die Sendeeinheit eine Unterbrechungsanweisung zum Unterbrechen eines Suchprozesses mit Ursprung in der ersten Anfrage sendet, wenn die zweiten Anfrage an die Dokumentenverwaltungssysteme in einem Fall gesendet wird, in dem der Antwortzustand der Dokumentenverwaltungssysteme angibt, dass die Suche unvollständig ist.

6. Dokumentensuchvorrichtung gemäß Anspruch 1, weiterhin mit einer Erzeugungseinheit, die eine Suchbedingung für die Suchverfeinerung basierend auf einem Ergebnis der Suche erzeugt, wenn die Ergebnisses der Suche von zumindest einem der Dokumentenverwaltungssysteme empfangen werden.

7. Dokumentensuchvorrichtung gemäß Anspruch 1, weiterhin mit einer Annahmeeinheit, die von einem Benutzer oder einer Benutzervorrichtung Informationen zum Erzeugen von Suchbedingungen für die Suchverfeinerung annimmt,
wobei die Erzeugungseinheit die Suchbedingungen für eine Suchverfeinerung basierend auf Informationen, die durch die Annahmeeinheit angenommen werden, erzeugt.

8. Dokumentensuchsystem mit der Dokumentensuchvorrichtung gemäß Anspruch 1 und einer Vielzahl von Dokumentenverwaltungssystemen.

9. Dokumentensuchverfahren, das eine Vielzahl von Dokumentenverwaltungssystemen (105, 130, 140, 150) veranlasst, eine Dokumentensuche parallel auszuführen, mit den Schritten:
Senden einer ersten Anfrage an jede der Vielzahl von Dokumentenverwaltungssystemen (105, 130, 140, 150), wobei die erste Anfrage eine erste Suchbedingung, die eingegeben wird, betrifft, und
Empfangen von Ergebnissen der Suche für die erste Anfrage von jedem der Vielzahl von Dokumentenverwaltungssystemen (105, 130, 140, 150); und
**gekennzeichnet durch** die Schritte:
Senden einer zweiten Anfrage mit einer Suchverfeinerungsbedingung, die eingegeben wird, zum Anfordern einer Suchverfeinerung bezüglich der ersten Anfrage an zumindest eines der Dokumentenverwaltungssysteme vor einem Empfangen des Ergebnisses der Suche von allen der Dokumentenverwaltungssysteme und nach einem Empfangen der Ergebnisse der Suche von zumindest einem der Dokumentenverwaltungssysteme, wobei die Suchverfeinerungsbedingung automatisch eingestellt wird, wenn eine Anzahl von Treffern in den Ergebnissen der Suche, die **durch** die Empfangseinheit (107) empfangen wird, gleich oder größer als eine vorbestimmte Anzahl ist, basierend auf Informationen zum Begrenzen der Suche, die im Voraus eingestellt sind,
Verwalten eines Antwortzustandes von jedem der Dokumentenverwaltungssysteme (105, 130, 140, 150); und
Auswählen eines Schemas zum Anfordern der zweiten Anfrage von zumindest einem der Dokumentenverwaltungssysteme gemäß dem verwalteten Antwortzustand,
Senden der zweiten Anfrage an zumindest eines der Dokumentenverwaltungssysteme unter Verwendung des ausgewählten Schemas,
wobei die zweite Anfrage das zumindest eine der Dokumentenverwaltungssysteme veranlasst, eine Suchverfeinerung mit der Suchverfeinerungsbedingungen gemäß dem ausgewählten Schema auszuführen, und
Empfangen eines Ergebnisses der Suche für die zweite Anfrage von dem zumindest einen der Dokumentenverwaltungssysteme.

10. Computerprogramm, das in einem computerlesbaren Medium gespeichert ist, um eine Vielzahl von Dokumentenverwaltungssystemen (105, 130, 140, 150) zu veranlassen, eine Dokumentensuche parallel auszuführen, wobei, wenn das Computerprogramm durch einen Computer des Dokumentenverwaltungssystems ausgeführt wird, der Computer veranlasst wird, die Schritte auszuführen:
Senden einer ersten Anfrage an jede der Vielzahl von Dokumentenverwaltungssystemen (105, 130, 140, 150), wobei die erste Anfrage eine erste Suchbedingung, die eingegeben wird, betrifft, und
Empfangen von Ergebnissen der Suche für die erste Anfrage von jedem der Vielzahl von Dokumentenverwaltungssystemen (105, 130, 140, 150); und
**gekennzeichnet durch** die Schritte:
Senden einer zweiten Anfrage mit einer Suchverfeinerungsbedingung, die eingegeben wird, zum Anfordern einer Suchverfeinerung bezüglich der ersten Anfrage an zumindest eines der Dokumentenverwaltungssysteme vor einem Empfangen des Ergebnisses der Suche von allen der Dokumentenverwaltungssysteme und nach einem Empfangen der Ergebnisse der Suche von zumindest einem der Dokumentenverwaltungssysteme, wobei die Suchverfeinerungsbedingung automatisch eingestellt wird, wenn eine Anzahl von Treffern in den Ergebnissen der Suche, die **durch** Empfangseinheit (107) empfangen wird, gleich oder größer als eine vorbestimmte Anzahl ist, basierend auf Informationen zum Begrenzen der Suche, die im Voraus eingestellt sind,
Verwalten eines Antwortzustandes von jedem der Dokumentenverwaltungssysteme (105, 130, 140, 150); und
Auswählen eines Schemas zum Anfordern der zweiten Anfrage von zumindest einem der Dokumentenverwaltungssysteme gemäß dem verwalteten Antwortzustand,
Senden der zweiten Anfrage an zumindest eines der Dokumentenverwaltungssysteme unter Verwendung des ausgewählten Schemas,
wobei die zweite Anfrage das zumindest eine der Dokumentenverwaltungssysteme veranlasst, eine Suchverfeinerung mit der Suchverfeinerungsbedingungen gemäß dem ausgewählten Schema auszuführen, und
Empfangen eines Ergebnisses der Suche für die zweite Anfrage von dem zumindest einen der Dokumentenverwaltungssysteme.

## Revendications

1. Appareil de recherche de documents (100) qui amène une pluralité de systèmes de gestion de documents (105, 130, 140, 150) à exécuter une recherche de documents en parallèle, et qui comprend :
une unité d'envoi (207) qui est adaptée pour envoyer une première requête à chacun de ladite pluralité de systèmes de gestion de documents, la première requête concernant une première condition de recherche qui est entrée, et
une unité de réception (207) qui est adaptée pour recevoir un résultat de la recherche pour la première requête en provenance de chacun de ladite pluralité de systèmes de gestion de documents, et
l'appareil étant **caractérisé par** :
une unité de commande de recherche (101) qui amène ladite unité d'envoi à envoyer une seconde requête comprenant une condition d'affinage de recherche qui est entrée pour demander un affinage de recherche pour la première requête à au moins un des systèmes de gestion de documents avant la réception du résultat de la recherche en provenance de tous les systèmes de gestion de documents et après la réception du résultat de la recherche en provenance d'au moins un des systèmes de gestion de documents, dans laquelle la condition d'affinage de recherche est établie automatiquement lorsqu'un nombre de réponses pertinentes dans les résultats de la recherche reçus par l'unité de réception (107) est égal ou supérieur à un nombre prédéterminé, sur la base d'informations pour limiter la recherche établies à l'avance,
dans lequel ladite unité de commande de recherche comprend
une unité de gestion qui gère un état de réponse de chacun desdits systèmes de gestion de documents ; et
une unité de sélection qui sélectionne un schéma pour demander la seconde requête d'au moins un des systèmes de gestion de documents en fonction de l'état de réponse géré par ladite unité de gestion,
dans lequel ladite unité de commande de recherche amène ladite unité d'envoi à envoyer la seconde requête à au moins un des systèmes de gestion de documents en utilisant le schéma sélectionné par ladite unité de sélection,
dans lequel la seconde requête amène ledit au moins un des systèmes de gestion de documents à exécuter un affinage de recherche avec la condition d'affinage de recherche en fonction du schéma sélectionné, et
dans lequel l'unité de réception est en outre adaptée pour recevoir un résultat de la recherche pour la seconde requête en provenance dudit au moins un des seconds systèmes de gestion de documents.

2. Appareil de recherche de documents selon la revendication 1, dans lequel ladite unité de sélection sélectionne un schéma pour ne pas envoyer la seconde requête pour un affinage de recherche auxdits systèmes de gestion de documents dans un cas où l'état de réponse desdits systèmes de gestion de documents indique que la recherche est terminée et que le nombre de réponses pertinentes est zéro.

3. Appareil de recherche de documents selon la revendication 1, dans lequel ladite unité de sélection sélectionne un schéma pour envoyer la seconde requête accompagné d'informations d'identification pour identifier des résultats de la recherche à partir de la première requête et d'une deuxième condition de recherche pour un affinage de recherche sur la base des résultats de la recherche à partir de la première requête auxdits systèmes de gestion de documents dans un cas où l'état de réponse desdits systèmes de gestion de documents indique que la recherche est terminée et que le nombre de réponses pertinentes est un ou plus.

4. Appareil de recherche de documents selon la revendication 1, dans lequel ladite unité de sélection sélectionne un schéma pour envoyer la seconde requête accompagné d'une troisième condition de recherche dans laquelle une condition de recherche pour un affinage de recherche est ajoutée à la première condition de recherche auxdits systèmes de gestion de documents dans un cas où l'état de réponse desdits systèmes de gestion de documents indique que la recherche est inachevée.

5. Appareil de recherche de documents selon la revendication 4, dans lequel ladite unité d'envoi envoie une commande d'interruption pour interrompre un processus de recherche ayant pour origine la première requête, lors de l'envoi de la seconde requête auxdits systèmes de gestion de documents dans un cas où l'état de réponse desdits systèmes de gestion de documents indique que la recherche est inachevée.

6. Appareil de recherche de documents selon la revendication 1, comprenant en outre une unité de création qui crée une condition de recherche pour l'affinage de recherche sur la base d'un résultat de la recherche lors de la réception du résultat de la recherche en provenance dudit au moins un des systèmes de gestion de documents.

7. Appareil de recherche de documents selon la revendication 1, comprenant en outre une unité d'acceptation qui accepte en provenance d'un utilisateur ou d'un appareil d'utilisateur des informations pour créer des conditions de recherche pour l'affinage de recherche,
dans lequel ladite unité de création crée les conditions de recherche pour un affinage de recherche sur la base d'informations acceptées par ladite unité d'acceptation.

8. Système de recherche de documents, comprenant ledit appareil de recherche de documents selon la revendication 1 et une pluralité de systèmes de gestion de documents.

9. Procédé de recherche de documents qui amène une pluralité de systèmes de gestion de documents (105, 130, 140, 150) à exécuter une recherche de documents en parallèle, et qui comprend les étapes suivantes :
envoyer une première requête à chacun de ladite pluralité de systèmes de gestion de documents (105, 130, 140, 150), la première requête concernant une première condition de recherche qui est entrée, et
recevoir des résultats de la recherche pour la première requête en provenance de chacun de ladite pluralité de systèmes de gestion de documents (105, 130, 140, 150) ; et,
le procédé étant **caractérisé par** les étapes suivantes :
envoyer une seconde requête comprenant une condition d'affinage de recherche qui est entrée pour demander un affinage de recherche pour la première requête à au moins un des systèmes de gestion de documents avant la réception du résultat de la recherche en provenance desdits tous les systèmes de gestion de documents et après la réception des résultats de la recherche en provenance d'au moins un des systèmes de gestion de documents, dans laquelle la condition d'affinage de recherche est établie automatiquement lorsqu'un nombre de réponses pertinentes dans les résultats de la recherche reçus par l'unité de réception (107) est égal ou supérieur à un nombre prédéterminé, sur la base d'informations pour limiter la recherche établies à l'avance,
gérer un état de réponse de chacun desdits systèmes de gestion de documents (105, 130, 140, 150) ; et
sélectionner un schéma pour demander la seconde requête d'au moins un des systèmes de gestion de documents en fonction de l'état de réponse géré,
envoyer la seconde requête à au moins un des systèmes de gestion de documents en utilisant le schéma sélectionné,
dans lequel la seconde requête amène ledit au moins un des systèmes de gestion de documents à exécuter un affinage de recherche avec la condition d'affinage de recherche en fonction du schéma sélectionné, et
recevoir un résultat de la recherche pour la seconde requête en provenance dudit au moins un des systèmes de gestion de documents.

10. Programme informatique stocké dans un support lisible par ordinateur pour amener une pluralité de systèmes de gestion de documents (105, 130, 140, 150) à exécuter une recherche de documents en parallèle, dans lequel, lorsque le programme informatique est exécuté par un ordinateur du système de gestion de documents, l'ordinateur est amené à exécuter les étapes suivantes :
envoyer une première requête à chacun de ladite pluralité de systèmes de gestion de documents (105, 130, 140, 150), la première requête concernant une première condition de recherche qui est entrée, et
recevoir des résultats de la recherche pour la première requête en provenance de chacun de ladite pluralité de systèmes de gestion de documents (105, 130, 140, 150) ; et,
**caractérisé par** les étapes suivantes :
envoyer une seconde requête comprenant une condition d'affinage de recherche qui est entrée pour demander un affinage de recherche pour la première requête à au moins un des systèmes de gestion de documents avant la réception du résultat de la recherche en provenance desdits tous les systèmes de gestion de documents et après la réception des résultats de la recherche en provenance d'au moins un des systèmes de gestion de documents, dans laquelle la condition d'affinage de recherche est établie automatiquement lorsqu'un nombre de réponses pertinentes dans les résultats de la recherche reçus par l'unité de réception (107) est égal ou supérieur à un nombre prédéterminé, sur la base d'informations pour limiter la recherche établies à l'avance,
gérer un état de réponse de chacun desdits systèmes de gestion de documents (105, 130, 140, 150) ; et
sélectionner un schéma pour demander la seconde requête d'au moins un des systèmes de gestion de documents en fonction de l'état de réponse géré,
envoyer la seconde requête à au moins un des systèmes de gestion de documents en utilisant le schéma sélectionné,
dans lequel la seconde requête amène ledit au moins un des systèmes de gestion de documents à exécuter un affinage de recherche avec la condition d'affinage de recherche en fonction du schéma sélectionné, et
recevoir un résultat de la recherche pour la seconde requête en provenance dudit au moins un des systèmes de gestion de documents.
